# EUROPEAN PATENT APPLICATION

(11) **EP 4 657 580 A1**
(43) Date of publication of application: **03.12.2025**
(21) Application number: 25172866.3
(22) Date of filing: 28.04.2025
(51) Int. Cl.: H01M 10/04, H01M 50/533

(54) **ELECTRODE ASSEMBLY AND RECHARGEABLE BATTERY INCLUDING THE SAME**

(30) Priority: 28.05.2024 KR 20240069574
(71) Applicant: SAMSUNG SDI CO., LTD., Yongin-si, Gyeonggi-do 17084 (KR)
(72) Inventor: KIM, Junghyun, Yongin-si, Gyeonggi-do 17084 (KR); CHO, Youngjae, Yongin-si, Gyeonggi-do 17084 (KR); KIM, Soyeon, Yongin-si, Gyeonggi-do 17084 (KR); PARK, Yeonjin, Yongin-si, Gyeonggi-do 17084 (KR); KANG, Bonggeun, Yongin-si, Gyeonggi-do 17084 (KR)
(74) Representative: Gulde & Partner

(57) **Abstract**

An embodiment of the present disclosure provides an electrode assembly that includes a first electrode, a separator, and a second electrode and is wound with the first electrode, the separator, and the second electrode stacked, including: each of the first electrode and the second electrode includes a substrate; and an active material layer disposed on at least a portion of the substrate, and a portion of the substrate to which the active material layer is not applied is bent in an opposite direction to a wound center.

## Description

### FIELD

The present disclosure relates to an electrode assembly and a rechargeable battery including the same.

### BACKGROUND

Rechargeable batteries are used for various purposes, such as a power source for small electronic devices such as mobile phones and laptop computers, and a power source for driving motors for transportation vehicles such as electric vehicles and hybrid vehicles. Rechargeable batteries may be classified into cylindrical, prismatic, and pouch types depending on their appearance. A cylindrical rechargeable battery includes a wound-type electrode assembly.

In the conventional electrode assembly, a portion of an electrode tab is removed so the portion of an electrode tab cannot be connected to a current collecting plate to prevent interference between a temporarily installed center pin and the electrode tab. Accordingly, the electrical resistance of the electrode assembly may increase.

### SUMMARY

The present disclosure is to overcome the above-described conventional problems, and an object of the present disclosure attempts to provide an electrode assembly that may minimize electrical resistance generation and a rechargeable battery including the same.

However, the technical problem to be solved by the present disclosure is not limited to the above, and other objects not mentioned herein will be understood from the following description by those skilled in the art.

A first aspect of the present disclosure relates to an electrode assembly, comprising: a first electrode and a second electrode stacked and wound with the first electrode around a wound center. Each of the first electrode and the second electrode comprises a substrate; and an active material layer disposed on at least a portion of the substrate, and a portion of the substrate to which the active material layer is not applied is bent in an opposite direction to the wound center.

The substrate comprises a base portion on which the active material layer is disposed; a first uncoated portion integrally formed with the base portion and disposed such that the first uncoated portion is exposed to the outside of the substrate; and a second uncoated portion extending from the first uncoated portion and having a width that decreases as it extends from a portion of the substrate to an outermost portion thereof.

The second uncoated portion may be bent in an opposite direction to the wound center.

The second uncoated portion may be divided into a plurality of sections having different lengths measured along a length direction of the substrate.

The plurality of sections of the second uncoated portion may comprise a first section, a second section, a third section, and a fourth section along a direction toward the wound center from the outermost portion of the substrate.

In addition, the second uncoated portion may gradually decrease in width from the fourth section to the first section.

A length of the first section measured along a length direction of the substrate may be shorter than a length of the second section, and the length of the second section may be shorter than a length of the third section.

The second uncoated portion may include a plurality of unit uncoated portions.

Lengths of the plurality of unit uncoated portions may gradually decrease from the first section to the fourth section measured along a length direction of the substrate.

A length of each of the plurality of unit uncoated portions in the fourth section in the second uncoated portion may gradually decreases along a direction away from the third section and measured along a length direction (L) of the substrate.

The plurality of unit uncoated portions may be separated by cutting lines formed in the second uncoated portion in a direction towards and/or extending from the first uncoated portion of the substrate.

In some embodiments, a separator may be disposed between the first electrode and the second electrode.

A second aspect of the present disclosure relates to a rechargeable battery including: an electrode assembly (e.g. as described in the first aspect of the disclosure); a case accommodating the electrode assembly; a terminal disposed on one side of the case such that the terminal is installed and is insulated from the case; a first current collecting plate connected to the first electrode and in contact with the case; and a second current collecting plate connected to the second electrode and in contact with the terminal.

Another aspect of the present disclosure relates to methods of manufacturing an electrode assembly. In a third aspect of the present disclosure, a method comprises providing a first electrode and a second electrode, wherein each of the first electrode and the second electrode comprises: a substrate and an active material layer disposed on at least a portion of the substrate, and the substrate comprises: a base portion on which the active material layer is disposed, a first uncoated portion integrally formed with the base portion and disposed such that the first uncoated portion is exposed to the outside of the substrate, and a second uncoated portion extending from the first uncoated portion and having a width that decreases as it extends from a portion of the substrate to an outermost portion thereof. Further the method comprises: stacking the first electrode and the second electrode; winding the stacked first and second electrodes around a wound center to form the electrode assembly; and bending a portion of the substrate to which the active material layer is not applied in an opposite direction to the wound center.

In some embodiments, the aforementioned bending may further comprise bending the second uncoated portion in an opposite direction to the wound center of the substrate.

In some embodiments, the method may comprise dividing the second uncoated portion into a plurality of sections having different lengths, wherein the plurality of sections of the second uncoated portion comprises a first section, a second section, a third section, and a fourth section along a direction toward the wound center from the outermost portion of the substrate.

In some embodiments, the method may further comprise cutting the second uncoated portion in a direction towards the first uncoated portion of the substrate and forming a plurality of unit uncoated portions.

In some embodiments, the method may further comprise cutting the second uncoated portion within the fourth section in a direction towards the first uncoated portion of the substrate and forming a plurality of unit uncoated portions with gradually decreasing length measured along a length direction of the substrate.

In some embodiments, the method may also comprise accommodating the electrode assembly of the first aspect of this disclosure into a case; disposing a terminal on one side of the case such that the terminal is installed in the case and is insulated from the case; connecting a first current collecting plate to the first electrode; contacting the first current collecting plate with the case; connecting a second current collecting plate to the second electrode; and contacting the second electrode with the terminal.

In the electrode assembly according to the present disclosure, a portion of the substrate to which the active material layer is not applied is bent in an opposite direction with respect to the wound center. In addition, a portion of the second uncoated portion is not removed so the portion of the second uncoated portion can be connected to a current collecting plate, and the length thereof decreases toward the outermost portion thereof. Accordingly, it is possible to minimize the increase in the electrical resistance of the electrode assembly.

In addition, the electrode assembly according to the present disclosure may prevent the second uncoated portion and the case from interfering with each other.

### BRIEF DESCRIPTION OF THE DRAWINGS

FIG. 1 illustrates a perspective view of a rechargeable battery to which an electrode assembly according to some embodiments of the present disclosure may be applied.
FIG. 2 illustrates a cross-sectional view of the rechargeable battery of FIG. 1, according to some embodiments.
FIG. 3 illustrates an exploded perspective view of an electrode assembly according to some embodiments of the present disclosure.
FIG. 4 illustrates a developed view of a first electrode of FIG. 3, according to some embodiments.

### DETAILED DESCRIPTION

Hereinafter, embodiments of the present disclosure will be described, in detail, with reference to the accompanying drawings such that they can be made and used by those skilled in the art. The present disclosure may, however, be embodied in many different forms and should not be construed as being limited to the embodiments set forth herein. Rather, these embodiments are provided so that this disclosure will be thorough and complete and will fully convey the concept of the present disclosure to those skilled in the art.

In addition, thickness or sizes of layers in the drawings are exaggerated for convenience of explanation and clarity, and like numbers refer to like elements in the drawings. As used herein, the term "and/or" includes any and all combinations of one or more of the associated listed items. In addition, it will also be understood that when an element A is referred to as being "coupled to" or "connected to" an element B, the element A can be directly coupled or connected to the element B or an intervening element C may be present therebetween such that the element A and the element B are indirectly connected to each other.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof.

It will also be understood that, although the terms first, second, and the like may be used herein to describe various members, elements, regions, areas, layers, and/or sections, these members, elements, regions, areas, layers and/or sections should not be limited by these terms. These terms are only used to distinguish one member, element, region, area, layer, and/or section from another. Thus, for example, a first member, a first element, a first region, a first area, a first layer, or a first section described below could be termed a second member, a second element, a second region, a second area, a second layer, or a second section without departing from the teachings of the present disclosure.

Spatially relative terms, such as "below," "beneath," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the device in the drawings is turned over, elements described as "below" or "beneath" other elements or features would then be oriented "on" or "above" the other elements or features. Thus, the term "below" may encompass both an orientation of above and below.

Before describing an electrode assembly according to some embodiments of the present disclosure, a rechargeable battery to which the electrode assembly may be applied according to some embodiments of the present disclosure will be described.

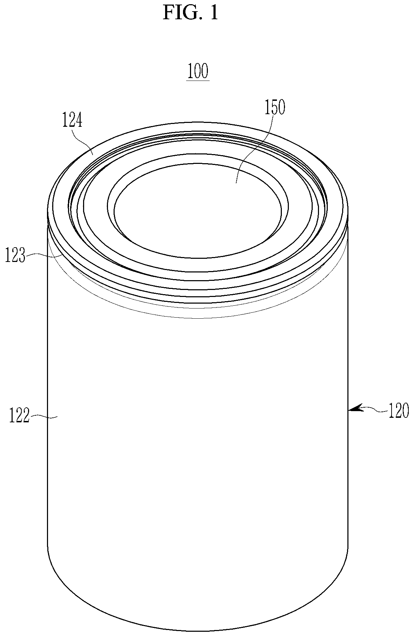

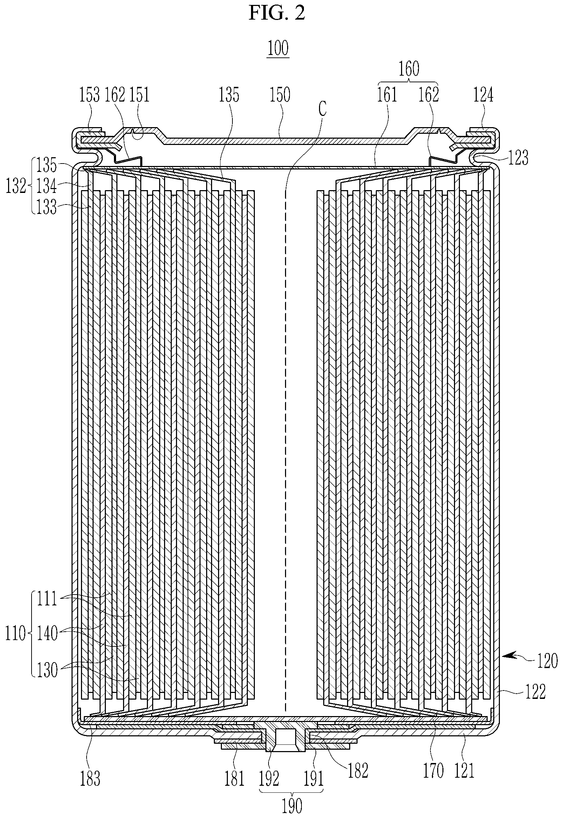

FIG. 1 illustrates a perspective view of a rechargeable battery to which an electrode assembly according to some embodiments of the present disclosure may be applied, and FIG. 2 illustrates a cross-sectional view of the rechargeable battery of FIG. 1, according to some embodiments.

Referring to FIG. 1 and FIG. 2, a rechargeable battery 100 may be a cylindrical rechargeable battery. The rechargeable battery 100 may include, for example, a case 120, an electrode assembly 110, a first current collecting plate 160, a second current collecting plate 170, a terminal 190, and a cap plate 150.

The case 120 accommodates the electrode assembly 110. A shape of the case 120 may be, for example, a cylindrical shape.

The case 120 may include a disk-shaped bottom portion 121 and a cylindrical side portion 122 extending upward from an edge of the bottom portion 121. A material of the case 120 may be configured of, for example, steel, aluminum, an aluminum alloy, combinations thereof, and/or the like. FIG. 1 illustrates the case in which the cap plate 150, to be described later, is disposed above and the bottom portion 121 is disposed below, but when the upper and lower portions of the rechargeable battery 100 are reversed, the bottom portion 121 may be referred to as an upper surface portion or a top portion.

The electrode assembly 110 may include a first electrode 130, a separator 111, and a second electrode 140. Each of the first current collecting plate 160 and the second current collecting plate 170, to be described later, may be fixed to each side (upper and lower sides) of the electrode assembly 110. The electrode assembly 110 will be described later.

The first current collecting plate 160 is connected to the first electrode 130 and is in contact with the case 120. In some embodiments, the first current collecting plate 160 may face one side of the electrode assembly 110 and may be fixed to the first electrode 130 by a method such as welding. Accordingly, the current of the first electrode 130 may be transmitted to the first current collecting plate 160.

The second current collecting plate 170 is connected to the second electrode 140 and is in contact with the terminal 190. In some embodiments, the second current collecting plate 170 may face the other side of the electrode assembly 110 (e.g., the opposite side of the electrode assembly that first current collecting plate faces) and may be fixed to the second electrode 140 by a method such as welding. Accordingly, the current of the second electrode 140 may be transmitted to the second current collecting plate 170.

The first current collecting plate 160 may be disposed on the upper side of the electrode assembly 110 based on the orientation of the electrode assembly shown in the drawing, and the second current collecting plate 170 may be disposed on the lower side of the electrode assembly 110 based on the orientation of the electrode assembly shown in the drawing, but the present disclosure is not limited thereto.

The terminal 190 is disposed on one side of the case 120 and is installed such that the terminal 190 is insulated from the case 120. In some embodiments, a terminal hole may be disposed at the center of the bottom portion 121 of the case 120, and the terminal 190 may be installed in the terminal hole.

The terminal 190 may include, for example, a first terminal 191 having a disk shape and a second terminal 192 having a substantially cylindrical shape. The first terminal 191 may be referred to as a terminal plate, and the second terminal 192 may be referred to as a rivet terminal.

The first terminal 191 may be disposed on the outside of the bottom portion 121, and the second terminal 192 may be inserted into the terminal hole. The second terminal 192 may be coupled to the first terminal 191 and the bottom portion 121 by riveting.

The second terminal 192 may be coupled to the second current collecting plate 170, and the terminal 190 may be charged with the same polarity as the second electrode 140 to function as a terminal (a positive electrode terminal) of the second electrode 140.

A first insulator 181 may be disposed between the bottom portion 121 and the first terminal 191. A second insulator 182 may include a portion disposed between the second terminal 192 and the bottom portion 121, and a portion disposed between the bottom portion 121 and the second current collecting plate 170.

A third insulator 183 may be additionally disposed between the second current collecting plate 170 and the second insulator 182. The first to third insulators 181, 182, and 183 may insulate the case 120 from the terminal 190.

In some embodiments, a beading portion 123 and a crimping portion 124 may be disposed on the side portion 122 of the case 120 described above. The beading portion 123 may be a portion concavely deformed toward the inside of the case 120, and the crimping portion 124 may be a portion in which an upper end portion of the side portion 122 is bent toward the inside of the case 120.

The electrode assembly 110 may be accommodated in a space between the bottom portion 121 and the beading portion 123, and shaking thereof may be suppressed by the beading portion 123 inside the case 120.

The first current collecting plate 160 may include a disk-shaped main body 161 and a plurality of connectors 162 extending upward from the edge of the main body 161. The plurality of connectors 162 may be disposed at substantially equal intervals along the circumferential direction of the main body 161.

Each of the plurality of connectors 162 may be in contact with the beading portion 123, and may be fixed to the beading portion 123 by a method such as welding. The case 120 may be charged with the same polarity as the first electrode 130 by the first current collecting plate 160 to function as a terminal (a negative electrode terminal) of the first electrode 130.

As another example, although not shown in the drawings, the first current collecting plate connected to the first electrode may be coupled to the terminal, and the second current collecting plate connected to the second electrode may be provided with the above-described connector to be fixed to the beading portion. In such embodiments, the case may function as a positive electrode terminal, and the terminal may function as a negative electrode terminal.

The cap plate 150 may be disposed on the outside (upper side) of the first current collecting plate 160. The edge of the cap plate 150 may be fixed between the beading portion 123 and the crimping portion 124 via an insulating gasket 153.

The cap plate 150 and the insulating gasket 153 may seal the case 120, and the cap plate 150 may be insulated from the first electrode 130, the second electrode 140, and the case 120 to be electrically non-polar. A coupling structure between the side portion 122 and the insulating gasket 153 may have a major influence on the sealing performance of the case 120.

A notch groove 151 may be formed on at least one surface of the cap plate 150. The notch groove 151 may have a V-shaped cross section, and may have an arc shape on the bottom surface (when a target object is viewed from below).

The internal temperature of the rechargeable battery 100 may increase due to any of a variety of causes including but not limited to rapid charging and discharging, external impact, and exposure to a high temperature environment, and the internal pressure of the rechargeable battery 100 may increase due to gasification of an electrolyte, and/or the like. When the internal pressure of the rechargeable battery 100 increases, the cap plate 150 may be broken from the notch groove 151 to discharge the internal gas.

The electrode assembly according to some embodiments of the present disclosure is not necessarily applied only to the above-described rechargeable battery. Hereinafter, an electrode assembly according to some embodiments of the present disclosure will be described in detail with reference to the accompanying drawings.

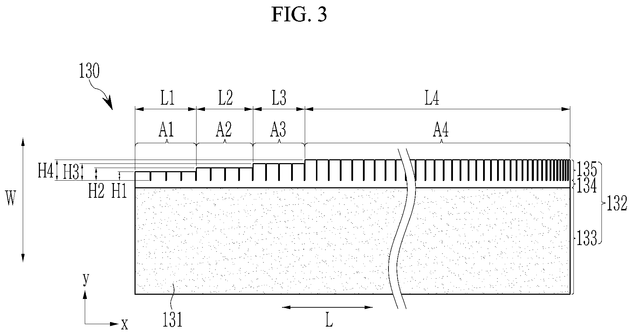

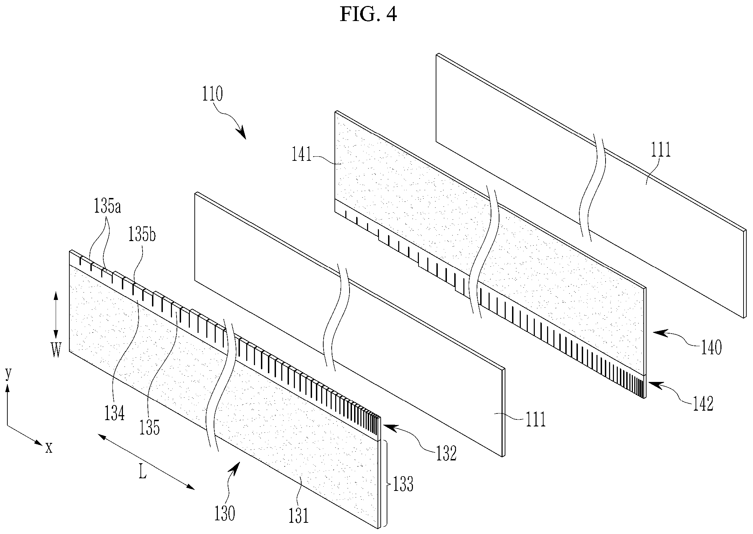

FIG. 2 illustrates a cross-sectional view of the rechargeable battery of FIG. 1, FIG. 3 illustrates an exploded perspective view of an electrode assembly according to an embodiment of the present disclosure, and FIG. 4 illustrates a developed view of a first electrode of FIG. 3. FIG.4 further illustrates the stacking order of the first and second electrodes and the separator.

Referring to FIG. 2 to FIG. 4, the electrode assembly 110 according to the embodiment of the present disclosure includes the first electrode 130, the separator 111, and the second electrode 140.

The electrode assembly 110 may be wound multiple times around a center pin (not illustrated) in a state in which the first electrode 130, the separator 111, and the second electrode 140 are stacked. Each of the first electrode 130, the separator 111, and the second electrode 140 may have a ribbon shape, and the electrode assembly 110 may be wound in a jelly roll shape.

The electrode assembly 110 may have a configuration in which the first electrode 130, the separator 111, the second electrode 140, and the separator 111 are stacked in that order. In this case, the positions of the first electrode 130 and the second electrode 140 may be switched. As described above, the center pin may be removed after the electrode assembly 110 is wound, and in this case, an empty space may be disposed at the center of the electrode assembly 110 (also referred to as wound center C).

The first electrode 130 may be referred to as a negative electrode, and the second electrode 140 may be referred to as a positive electrode. The first electrode 130 and the second electrode 140 include substrates 132 and 142 and active material layers 131 and 141 disposed on at least portions of the substrates 132 and 142, respectively.

Here, a substrate 132 included in the first electrode 130 is referred to as a first substrate 132, and an active material layer 131 included in the first electrode 130 is referred to as a first active material layer 131. In addition, a substrate 142 included in the second electrode 140 is referred to as a second substrate 142, and an active material layer 141 included in the second electrode 140 is referred to as a second active material layer 141.

In some embodiment, the first electrode 130 may include the first substrate 132 and the first active material layer 131 disposed on at least a portion of the first substrate 132.

The first substrate 132 may be referred to as a negative electrode current collector, and the first active material layer 131 may be referred to as a negative active material layer. The first substrate 132 may be made of copper, nickel, a copper alloy, a nickel alloy, combinations thereof, or the like, and may be in the form of a thin plate or a foam. The first active material layer 131 includes a negative active material, and may further include selectively a binder and/or a conductive material.

In the first active material layer 131, the negative active material may include at least one of a carbon-based active material, an alloy of lithium metal, and a silicon-carbon composite active material. The carbon-based negative active material may contain at least one of natural graphite and artificial graphite. The alloy of the lithium metal may be an alloy of lithium and a metal selected from Na, K, Pb, Cs, Fr, Be, Mg, Ca, Sr, Si, Sb, Pb, In Zn, Ba, Ra, Ge, Al, and Sn.

The silicon-carbon composite active material may include at least one of a first negative active material, a second negative active material, and a third negative active material. The first negative active material may include a plurality of silicon nanoparticles and an amorphous carbon coating layer disposed on the surface of the silicon nanoparticles.

The second negative active material may include a core including a silicon-carbon composite and a polymer coating layer disposed on the core. The third negative active material may include a core including a silicon-based material and a carbon-based coating layer disposed on the core.

The second electrode 140 may include the second substrate 142 and the second active material layer 141 disposed on at least a portion of the second substrate 142. The second substrate 142 may be referred to as a positive current collector, and the second active material layer 141 may be referred to as a positive active material layer. The second substrate 142 may be made of aluminum or the like, and may be in the form of a thin plate or a foam. The second active material layer 141 includes a positive active material, and may further include selectively a binder and/or a conductive material.

In the second active material layer 141, the positive active material may include a lithium transition metal composite oxide. The lithium transition metal composite oxide may include, for example, at least one of a lithium-nickel-based oxide, a lithium-cobalt-based oxide, a lithium-manganese-based oxide, a lithium-iron phosphate-based oxide, and a cobalt-free nickel-manganese-based oxide.

In each of the first active material layer 131 and the second active material layer 141, the binder may include at least one of an aqueous binder, a non-aqueous binder, and a dry binder. In each of the first active material layer 131 and the second active material layer 141, the conductive material may include at least one of a carbon-based material such as natural graphite, artificial graphite, carbon black, carbon fiber, carbon nanofiber, carbon nanotube, metal powder including copper, nickel, aluminum, silver, and the like, and/or a metal material in the form of a metal fiber, and a conductive polymer such as a polyphenylene derivative.

The separator 111 may be configured of a porous substrate, or a porous substrate with a coating layer disposed on at least one surface thereof. The porous substrate may include one or more of polyethylene, polypropylene, polyethylene terephthalate, polypropylene terephthalate, polybutylene terephthalate, polyester, polycarbonate, and polyimide. The coating layer may include a binder, and the binder may include a polyvinylidene fluoride-based compound. The separator 111 insulates the first electrode 130 and the second electrode 140 from each other while allowing lithium ions to move.

In the substrate 132 included in the electrode assembly 110 according to some embodiments of the present disclosure, a portion to which the active material layer 131 is not applied is bent in an opposite direction with respect to the wound center. Here, the wound center C of the electrode assembly 110 is an empty space in which a center pin (not shown) is disposed and then removed during the manufacturing process of the rechargeable battery 100 (see FIGs. 1 and 2). That is, a portion of the substrate 132 on which the active material layer 131 is not applied may be bent toward the side portion 122 of the case 120.

The substrate 132 may include, for example, a base portion 133, a first uncoated portion 134, and a second uncoated portion 135. Hereinafter, for better comprehension and ease of description, the description is limited to the case in which the substrate 132 is the first substrate 132 of the first electrode 130, but the present disclosure is not limited thereto, and the substrate 132 may be the second substrate 142 of the second electrode 140.

The active material layer 131 is disposed on one surface of the base portion 133. The active material layer 131 may be manufactured in a film form to be attached to the base portion 133. Alternatively, the active material layer 131 may be obtained by curing a slurry discharged from a slit coater.

The first uncoated portion 134 is integrated with the base portion 133 and is disposed such that the first uncoated portion 134 is exposed to the outside of the active material layer 131. In the substrate 132, the first uncoated portion 134 and the second uncoated portion 135 excluding the base portion 133 are portions without the active material layer 131.

Based on the direction shown in FIG. 3, the active material layer 131 may be disposed in the base portion 133 that is a lower portion of the substrate 132. In addition, the first uncoated portion 134 may have a line shape, and may be disposed on the upper side of the base portion 133 along the longitudinal direction L (x direction) of the substrate 132. The width of the first uncoated portion 134 measured along the width direction W (y-direction) of the substrate 132 may be relatively shorter than the width of the second uncoated portion 135.

The second uncoated portion 135 is a portion of the substrate 132 that is not covered by the active material layer 131, and whose surface is exposed. The second uncoated portion 135 extends from the first uncoated portion 134. That is, the second uncoated portion 135 may extend from the first uncoated portion 134 in the width direction W of the substrate 132 (i.e. in the y direction with respect to the direction shown in FIG. 3). The second uncoated portion 135 is formed so that the width H4, H3, H2, H1 extending from a portion of the substrate 132 decreases as it goes toward the outermost portion thereof. This will be described in detail later.

The second uncoated portion 135 may be referred to as a substrate tab or an electrode tab. The second uncoated portion 135 may be bent in the opposite direction to the wound center C. In other words, second uncoated portion 135 may be bent radially outwards (away from the wound center C of the electrode assembly).

The base portion 133, the first uncoated portion 134, and the second uncoated portion 135 described above may be integrally formed. The substrate 132 may be manufactured by cutting a metal foil with a laser beam.

In this case, the second uncoated portion 135 may be formed by repeatedly cutting the substrate 132 by a laser beam. Accordingly, since the second uncoated portion 135 has a plurality of cutting lines 135b, each of the second uncoated portions 135 may be easily bent. The plurality of cutting lines 135b may be formed in a direction orthogonal to the longitudinal direction L (or length direction L) of the substrate 132 (e.g., the plurality of cutting lines 135b may be formed along the y-direction (or width direction W) of the substrate as shown in FIGs. 3 or 4). In addition, although not shown in the drawing, the plurality of cutting lines 135b may be formed in a diagonal direction to the longitudinal direction of the substrate 132. The plurality of cutting lines 135b may also be formed in any of a variety of direction as the direction of the plurality of cutting lies 135 are not limited to this example.

Meanwhile, the second uncoated portion 135 may be divided (e.g. by cutting, preferably cutting by a laser beam) into a plurality of sections A1, A2, A3, and A4 having different lengths L1, L2, L3, L4. In other words, for example in an unwound state of the substrate, the substrate may be divided into a plurality of sections A1, A2, A3, and A4 in a length direction L (x direction), each section may have different length L4, L3, L2, L1 (measured along x direction or length direction L of the substrate 132 and may have different widths H4, H3, H2, H1 (measured along y direction or width direction W of the substrate 132).

The plurality of sections A1, A2, A3, and A4 of the second uncoated portion 135 may include a first section A1, a second section A2, a third section A3, and a fourth section A4 each positioned along a direction toward the wound center from the outermost side of the substrate 132.

In this case, the different width H4, H3, H2, and H1 of the second uncoated portion 135 may gradually decrease from the fourth section A4 to the first section A1.

In some embodiments, the width H1 of the second uncoated portion 135 of the first section A1 is smaller than the width H2 of the second uncoated portion 135 of the second section A2. In addition, the width H2 of the second uncoated portion 135 of the second section A2 is smaller than the width H3 of the second uncoated portion 135 of the third section A3. In addition, the width of the second uncoated portion 135 of the fourth section A4 may be the longest width of sections A1, A2, A3, and A4.

When the electrode assembly 110 according to some embodiments of the present disclosure is installed inside the case 120 of the rechargeable battery 100, the first section A1 is disposed at the outermost side of the electrode assembly 110.

As described above, the second uncoated portion 135 is bent in the opposite direction to the wound center C of the electrode assembly 110. In contrast, if all the lengths of the second uncoated portion are the same, the second uncoated portion disposed at the outermost side of the electrode assembly and the case of the rechargeable battery may interfere with each other.

However, in the electrode assembly 110 according to some embodiments of the present disclosure, the widths of the second uncoated portion 135 may gradually decrease toward the outermost side. Accordingly, the second uncoated portion 135 and the case 120 may be prevented from interfering with each other.

Conventionally, a portion of an electrode tab is removed so the portion of an electrode tab cannot be connected to a current collecting plate to prevent interference between a temporarily installed center pin and the electrode tab. Accordingly, the electrical resistance of the electrode assembly is inevitably increased.

However, in the electrode assembly 110 according to some embodiments of the present disclosure, a portion of the second uncoated portion 135 is not removed so the portion of the second uncoated portion 135 can be connected to the second current collecting plate 160, and its width decreases as it goes towards the outermost side. Accordingly, it is possible to minimize the increase in the electrical resistance of the electrode assembly 110.

Meanwhile, a length L1 of the first section A1 measured along the length direction (x direction) of the substrate 132 is relatively longer than a length L2 of the second section A2. In addition, the length L2 of the second section A2 may be relatively longer than a length L3 of the third section A3.

The first section A1 is disposed at the outermost side of the wound electrode assembly 110, the second section A2 is disposed inside the first section A1, and the third section A3 is disposed inside the second section A2.

As described above, the first section A1 has a relatively longer distance to the center of the electrode assembly 110 (wound center C) than the second section A2, and the second section A2 has a relatively longer distance to the center of the electrode assembly 110 than the third section A3. Accordingly, the first section A1 may be installed to entirely cover the outermost portion of the electrode assembly 110, and the second section A2 may be installed to cover immediately inside the first section A1.

Accordingly, as described above, the widths H1, H2, and H3 of the second uncoated portion 135 may gradually increase toward the first section A1, the second section A2, and the third section A3.

Meanwhile, the second uncoated portion 135 may include a plurality of unit uncoated portions 135a. The plurality of unit uncoated portions 135a may be formed by cutting a portion of the second uncoated portion in a direction towards and/or extending from the first uncoated portion 134 several times. That is, each of the unit uncoated portions 135a may be separated by the cutting line 135b formed by cutting by a laser beam.

In addition, the length (measured along the x direction) of the plurality of unit uncoated portions 135a may gradually decrease from the first section A1 to the fourth section A4.

In addition, the length (measured along the x direction) of each of the plurality of unit uncoated portions 135a in the fourth section A4 in the second uncoated portion 135 may gradually decrease as along a direction away from the third section A3 along the x-axis as shown in FIG. 3. In other words, the closer the unit uncoated portion 135a to the wound center C, the shorter its length (measured along the x direction) and the greater its width (measured along the y direction), wherein each plurality of unit uncoated portions 135a in the corresponding section A1, A2, A3 or A4 preferably have the same width (measured along the y direction). A radius of curvature of the substrate 132 decreases as it is disposed inside the electrode assembly 110.

As described above, the width of the unit uncoated portion gradually increases from the outermost side of the electrode assembly 110 to the center (wound center C) thereof (and the length of the unit uncoated portion gradually decreases from the outermost side of the electrode assembly 110 to the wound center C thereof), so that the unit uncoated portion 135a may have a width corresponding to the radius of curvature of the substrate 132. Accordingly, the boundary portion of the second uncoated portion 135 with the first uncoated portion 134 is not torn, so that the second uncoated portion 135 may be smoothly bent.

One embodiment of the present disclosure may relate to an electrode assembly, comprising: a first electrode and a second electrode stacked and wound with the first electrode, wherein: each of the first electrode and the second electrode comprises a substrate; and an active material layer disposed on at least a portion of the substrate, and a portion of the substrate to which the active material layer is not applied is bent in an opposite direction to a wound center.

The substrate may comprise a base portion on which the active material layer is disposed; a first uncoated portion integrally formed with the base portion and disposed such that the first uncoated portion is exposed to the outside of the substrate; and a second uncoated portion extending from the first uncoated portion and having a length that decreases as it extends from a portion of the substrate to an outermost portion thereof.

The second uncoated portion may be bent in an opposite direction to the wound center of the substrate.

The second uncoated portion may be divided into a plurality of sections having different lengths.

The plurality of sections of the second uncoated portion may comprise a first section, a second section, a third section, and a fourth section along a direction toward the wound center from the outermost portion of the substrate.

The second uncoated portion may gradually decrease in length from the fourth section to the first section.

A length of the first section measured along a length direction of the substrate may be longer than a length of the second section, and the length of the second section may be longer than a length of the third section.

The second uncoated portion may include a plurality of unit uncoated portions.

Widths of the plurality of unit uncoated portions may gradually decrease from the first section to the fourth section.

A width of each of the plurality of unit uncoated portions in the fourth section in the second uncoated portion may gradually decrease along a direction away from the third section.

The plurality of unit uncoated portions may be formed by cutting portions of the second uncoated portion in a direction towards and/or extending from the first uncoated portion of the substrate.

In some embodiments, a separator is disposed between the first electrode and the second electrode.

Another embodiment of the present disclosure may relate to a rechargeable battery including: an electrode assembly (e.g. as described in the first aspect of the disclosure); a case accommodating the electrode assembly; a terminal disposed on one side of the case such that the terminal is installed and is insulated from the case; a first current collecting plate connected to the first electrode and in contact with the case; and a second current collecting plate connected to the second electrode and in contact with the terminal.

Another embodiment of the present disclosure may relate to methods of manufacturing an electrode assembly. In an embodiment of the present disclosure, a method may comprise providing a first electrode and a second electrode stacked and wound with the first electrode to form the electrode assembly, wherein: each of the first electrode and the second electrode comprises: a substrate, and an active material layer disposed on at least a portion of the substrate; and a portion of the substrate to which the active material layer is not applied is bent in an opposite direction to a wound center.

In some embodiments, the substrate comprises a base portion on which the active material layer is disposed; a first uncoated portion integrally formed with the base portion and disposed such that the first uncoated portion is exposed to the outside of the substrate; and a second uncoated portion extending from the first uncoated portion and having a length that decreases as it extends from a portion of the substrate to an outermost portion thereof.

In some embodiments, the method comprises bending the second uncoated portion in an opposite direction to the wound center of the substrate.

In some embodiments, the method comprises dividing the second uncoated portion into a plurality of sections having different lengths.

In some embodiments, the plurality of sections of the second uncoated portion comprises a first section, a second section, a third section, and a fourth section along a direction toward the wound center from the outermost portion of the substrate.

In some embodiments, the method comprises cutting portions of the second uncoated portion in a direction towards the first uncoated portion of the substrate.

In some embodiments, the method may comprise accommodating the electrode assembly of the first aspect of this disclosure into a case; disposing a terminal on one side of the case such that the terminal is installed in the case and is insulated from the case; connecting a first current collecting plate to the first electrode; contacting the first current collecting plate with the case; connecting a second current collecting plate to the second electrode; and contacting the second electrode with the terminal.

Although several embodiments of the present disclosure have been described above, while this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims. Therefore, those skilled in the art will understand that various modifications and other equivalent embodiments of the present disclosure are possible. Consequently, the true technical protective scope of the present disclosure must be determined based on the technical features of the appended claims.

## Claims

1. An electrode assembly (110), comprising:
a first electrode (130) and a second electrode (140) stacked and wound with the first electrode (130) around a wound center (C),
each of the first electrode (130) and the second electrode (140) comprises:
a substrate (132, 142);
an active material layer (131) disposed on at least a portion of the substrate (132, 142); and
a portion of the substrate to which the active material layer (131) is not applied is bent in an opposite direction to the wound center (C);
wherein the substrate (132, 142) comprises:
a base portion (133) on which the active material layer (131) is disposed;
a first uncoated portion (134) integrally formed with the base portion (133) and disposed such that the first uncoated portion (134) is exposed to the outside of the active material layer (131); and
a second uncoated portion (135) extending from the first uncoated portion (134) and having a width that decreases as it extends from a portion of the substrate to an outermost portion thereof.

2. The electrode assembly (110) of claim 1, wherein
the second uncoated portion (135) is bent in an opposite direction to the wound center (C).

3. The electrode assembly (110) of one of claims 1 or 2, wherein
the second uncoated portion (135) is divided into a plurality of sections (A1, A2, A3, A4) having different lengths (L1, L2, L3, L4) measured along a length direction (L) of the substrate.

4. The electrode assembly (110) of claim 3, wherein
the plurality of sections of the second uncoated portion (135) comprises:
a first section (A1), a second section (A2), a third section (A3), and a fourth section (A4) along a direction toward the wound center from the outermost portion of the substrate (132, 142), and
wherein the second uncoated portion gradually decreases in width (W) from the fourth section (A4) to the first section (A1).

5. The electrode assembly (110) of claim 4, wherein
a length (L1) of the first section (A1) measured along a length direction (L) of the substrate is shorter than a length (L2) of the second section (A2), and the length (L2) of the second section (A2) is shorter than a length (L3) of the third section (A3).

6. The electrode assembly (110) of one of the preceding claims, wherein
the second uncoated portion (135) includes a plurality of unit uncoated portions (135a).

7. The electrode assembly (110) of claim 6, wherein
lengths of the plurality of unit uncoated portions (135a) gradually decrease from the first section (A1) to the fourth section (A4) measured along a length direction (L) of the substrate.

8. The electrode assembly (110) of one of claims 6 or 7, wherein
a length of each of the plurality of unit uncoated portions (135a) in the fourth section in the second uncoated portion gradually decreases along a direction away from the third section and measured along a length direction (L) of the substrate.

9. The electrode assembly (110) of at least one of claims 6 to 8, wherein
the plurality of unit uncoated portions (135a) are separated by cutting lines (135b) formed in the second uncoated portion in a direction towards and/or extending from the first uncoated portion (134) of the substrate (132, 142).

10. A rechargeable battery (100) comprising:
the electrode assembly (110) of one of the preceding claims;
a case (120) accommodating the electrode assembly (110);
a terminal (190) disposed on one side of the case (120);
a first current collecting plate (160) connected to the first electrode (130) and electrically connected to the case (120); and
a second current collecting plate (170) connected to the second electrode (140) and
electrically connected to the terminal (190).

11. A method for manufacturing an electrode assembly (110), comprising:
providing a first electrode (130) and a second electrode (140), each of the first electrode (130) and the second electrode (140) comprises:
a substrate (132, 142) and an active material layer disposed on at least a portion of the substrate (132, 142), wherein the substrate (132, 142) comprises:
a base portion (133) on which the active material layer is disposed,
a first uncoated portion (134) integrally formed with the base portion (133) and disposed such that the first uncoated portion (134) is exposed to the outside of the substrate (132, 142), and
a second uncoated portion extending from the first uncoated portion (134) and having a width that decreases as it extends from a portion of the substrate (132, 142) to an outermost portion thereof;
stacking the first electrode (130) and the second electrode (140);
winding the stacked first and second electrodes (130, 140) around a wound center (C) to form the electrode assembly (110); and
bending a portion of the substrate (132, 142) to which the active material layer is not applied in an opposite direction to the wound center (C).

12. The method of claim 11, further comprising:
bending the second uncoated portion (135) in an opposite direction to the wound center (C).

13. The method of one of claims 11 or 12, further comprising:
dividing the second uncoated portion (135) into a plurality of sections having different lengths, wherein the plurality of sections of the second uncoated portion comprises: a first section (A1), a second section (A2), a third section (A3), and a fourth section (A4) along a direction toward the wound center (C) from the outermost portion of the substrate (132, 142).

14. The method of claim 13, further comprising:
cutting the second uncoated portion (135) in a direction towards the first uncoated portion (134) of the substrate (132, 142) and forming a plurality of unit uncoated portions (135a).

15. The method of one of claims 13 or 14, further comprising:
cutting the second uncoated portion within the fourth section in a direction towards the first uncoated portion (134) of the substrate (132, 142) and forming a plurality of unit uncoated portions (135a) with gradually decreasing length measured along a length direction (L) of the substrate.
